# EUROPEAN PATENT SPECIFICATION

(11) **EP 2 709 466 B1**
(45) Date of publication and mention of the grant of the patent: **23.03.2016**
(21) Application number: 12785185.5
(22) Date of filing: 16.05.2012
(51) Int. Cl.: A23L 21/25

(54) **METHOD OF TREATING HONEY**
VERFAHREN ZUR BEHANDLUNG VON HONIG
MÉTHODE DE TRAITEMENT DU MIEL

(30) Priority: 17.05.2011 CA 2740841
(43) Date of publication of application: 26.03.2014
(73) Proprietor: Heinen, Dirk, Edmonton, Alberta T5E 5S7 (CA)
(72) Inventor: Heinen, Dirk, Edmonton, Alberta T5E 5S7 (CA)
(74) Representative: Dempster, Benjamin John Naftel
(86) International application number: PCT/CA2012/050320
(87) International publication number: WO 2012/155268

(56) References cited:
- CA-A- 226 601
- FR-A1- 2 623 693
- FR-A1- 2 732 192
- FR-A1- 2 833 136
- US-A- 5 715 747

## Description

This invention relates to a method for treating honey to form a smooth spreadable product without use of heat.

### BACKGROUND OF THE INVENTION

In nature, nectar is collected by bees from the flowering plant and brought back to the hive as a liquid and converted into honey. In this process it is stored in cells and covered to preserve it. Honey farmers collect the honey from the hives and extract it as a liquid and store it in 170 litres (45 gallon) barrels that are then for sale on the wholesale market. Naturally over time the liquid honey will begin to crystallize into a solid block. When the honey reaches the processing plants to be repackaged into container for retail sale it is put into giant hot rooms to return the honey back into a liquid so that it can be handled. From there it is heated more and filtered (removing many of the natural properties like pollen, propolus, wax etc.) and then packaged and depending on what type of honey it is going to be it may be super cooled to stimulate recrystallization.

The biggest reason for this type of processing is that the majority of the population does not like the honey that is hard because it is not spreadable or scoopable.

On the other hand there is a percentage of the population that only wants the raw honey because it is natural and unaltered. That market has grown significantly over the last five years. However the honey can be too hard depending on what time of the season the container is poured. Each different floral honey has different taste, texture, color and rate at which it crystallizes and how hard it will become.

US Patent 4,986,855 issued January 22 1991 by Sterling discloses a method of forming a creamed honey which can be dispensed through a nozzle of a squeeze container by admixing liquid honey with seeding crystals.

US Patent 5,715,747 issued February 10 1998 by Fedon discloses a method for separating a wax and honey mixture obtained by an uncapping process by feeding the mixture into an Archimedes screw to separate the materials by pressure.

US Patent 2,052,358 issued August 25 1936 by Lund discloses a method of whipping honey with additional ingredients to form an aerated honey whip.

US Patent 4,328,743 issued May 11 1982 by Fager discloses a machine for separating honey from honeycomb cappings using two converging conveyor belts so that the honey is squeezed through openings in the belts.

### SUMMARY OF THE INVENTION

It is one object of the invention to provide a method for treating honey to form a smooth spreadable product without use of heat.

According to one aspect of the invention there is provided a method for forming a soft, spreadable honey product comprising:
providing a container with a cylindrical container wall;
rotating an auger within the container with an exterior auger flight having an outer edge closely adjacent the container wall leaving a clearance therebetween;
the auger flight acting to drive material to one discharge end of the container with a discharge valve at the discharge end;
providing one or more buckets or barrels of raw solid crystalline honey and feeding the honey in solid form onto the flight of the auger to be engaged into the flight and carried toward the discharge end;
maintaining the discharge valve closed for period of time to cause the honey to be fed by the auger flight to the discharge end and to pass through the clearance along the container from the discharge end in a mixing action to effect mixing of the honey;
the mixing action being carried out until the crystals in the honey are broken down sufficiently to form the honey into the soft, spreadable honey product;
the mixing action being carried out without the use of any heat at any time;
and after the mixing action opening the discharge valve to discharge the product.

Preferably the container is sufficiently large to receive a plurality of the buckets or barrels so that raw solid honey from a plurality of the buckets or barrels can be added and admixed.

The size of the equipment and particularly the container and feed chute can vary depending on the scale of production. Thus in some cases a relatively small container may be provided of the order of 75 litres (20 gallons) so as to be of sufficient size to receive four buckets each of 19 litres (5 gallons). For larger scale production, the container may be 10 times that size to receive four commercial size barrels of the solid raw honey after storage for the season. However it will be appreciated that the method of the present invention can be used in batches of whatever size the manufacturer requires.

Preferably the plurality of buckets or barrels are taken from different times of the production season so as to contain honey from different plants. That is at the end of the production season, the collected honey from different times during the season and therefore formed from different plants is collated and admixed using the system.

Preferably the raw solid honey from one of the buckets or barrels is fed as a solid block through a feed chute onto the flight of the auger with the auger flight acting to break down the solid body by breaking away portions which are then fed forwardly by the auger flight to the mixing action at the discharge end.

It is important in this process that the raw solid honey is not filtered and is not heated so that it remains of the raw quality preferred by many users.

Typically the clearance is in the range to 0.15875 to 0.3175 cm (1/16 to 1/8 inch).

Preferably the mixing action causes the crystals to fracture.

Preferably the mixing action causes the crystals to interact with one another so as to grind them down making them smooth and small.

Preferably the auger is arranged with an axis thereof vertical so that the discharge end is at the bottom and the raw solid honey is fed from one side through a feed chute.

The arrangement as described herein provides a method and machine that not only makes a smooth, creamy, spreadable product but it also combines all the different floral honey. It also uses less energy. By mixing all the different floral honeys together the method creates a very consistent product not changing in taste, color or texture.

This method takes a solid barrel or barrels of honey and turns them into a soft, spreadable product without the use of any heat at any time of the production. The use of a slow turning auger inside a tube gently massages the honey, in the form of a rock tumbler. The essence of this process is that it acts to fracture the crystals in a cool environment so as not to change the molecular structure of the crystals. All it does is grind them down making them smooth and small. Because this is done without the use of heat the crystals will not rebind to each other leaving the finished product soft and spreadable indefinitely.

The process can be used with an all natural farm that wants to market an all natural product that doesn't have to be hard. Also because it does not require any additional heat during the creation of this product the process has less of an environmental impact than conventional processing plants.

The general concept is an auger screw inside of a pipe with a clearance between an outer edge of the flight and the inside surface of the pipe that is used to draw the hard honey in from a solid block discharged from a 19 litres (5 gallon) pail. The honey is drawn in and circulated by the auger, mechanically breaking up the crystalline structure of the honey. Once it has circulated long enough to produce the desired texture a ball valve on the bottom of the unit is opened and the auger pushes the honey out of the machine.

The total capacity of the current design is 75 litres (20 gallons), allowing mixing different blends of honey. The auger is turned using an electric motor and gearbox.

### BRIEF DESCRIPTION OF THE DRAWINGS

One embodiment of the invention will now be described in conjunction with the accompanying drawings in which:

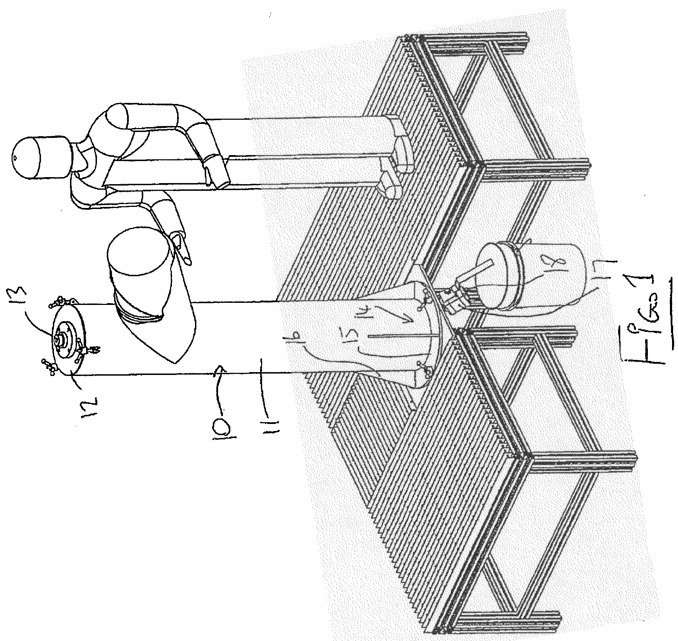

Figure 1 is an isometric view of an apparatus for use in the method of the present invention.

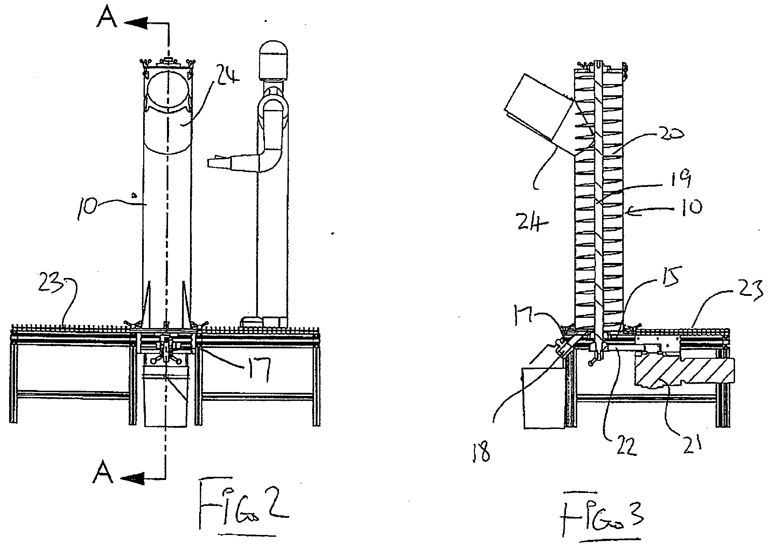

Figure 2 is a side elevational view of the apparatus of Figure 1.
Figure 3 is a cross-sectional view along the lines A-A of the apparatus of Figure 2.

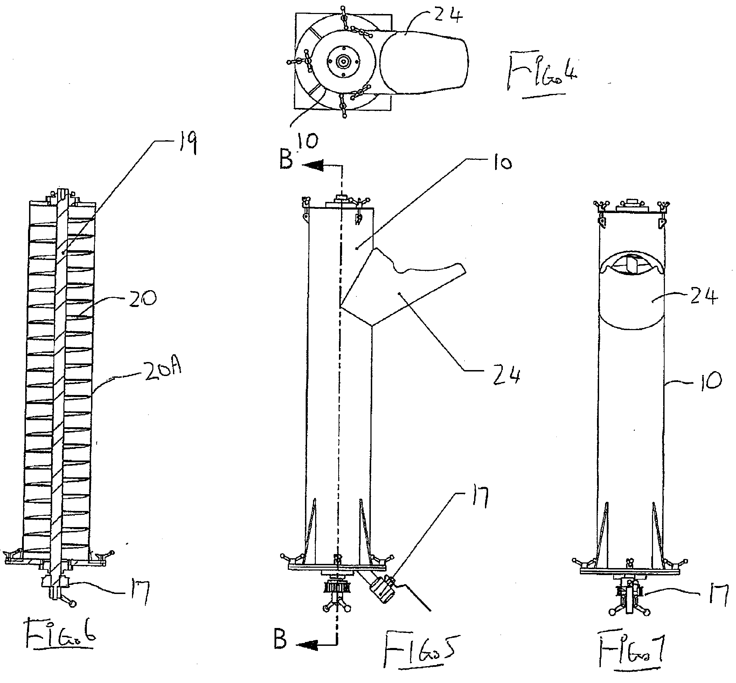

Figure 4 is a top plan view of the auger of the apparatus of Figure 1.
Figure 5 is a side elevational view of the auger of the apparatus of Figure 1.
Figure 6 is a cross-sectional view along the lines B-B of the apparatus of Figure 5.
Figure 7 is a front elevational view of the auger of the apparatus of Figure 1.

In the drawings like characters of reference indicate corresponding parts in the different figures.

### DETAILED DESCRIPTION

The apparatus of the Figures comprises a vertical auger 10 with an outer container or pipe 11 having an upper end 12 with a bearing 13. The lower end 14 is closed by a base plate 15 secured by bolts and supported by braces 16. An inclined discharge pipe connects to the end plate 15 and extends downwardly and forwardly to a bottom mouth with a valve 18 so that when opened the material can discharge into a receptacle presented in front of the container.

The auger 10 includes a vertical shaft 19 within the container and supported in the bearings with an auger flight 20 carried on the shaft. The shaft is driven using an electric motor 21 and gearbox 22 including a belt or chain drive, all mounted under a floor 23 on which the operator can stand.

A feed chute 24 is welded to one side of the pipe 11 at a position adjacent to but spaced from the end wall 12. The feed chute is circular in cross-section allowing the entry into the chute of a single solid mass of raw honey dumped from a bucket, pail or barrel.

In the method, the auger flight 20 is rotated within the container 11 with an outer edge closely adjacent the container wall leaving a clearance 20A therebetween. The auger flight acts to drive the material to the discharge end 14 of the container. The discharge valve is closed for period of time to cause the honey to be fed by the auger flight to the discharge end and to pass through the clearance along the container from the discharge end in a mixing action to effect mixing of the honey.

The mixing action is carried out until the crystals in the honey are broken down sufficiently to form the honey into the soft, spreadable honey product. This is obtained by causing the crystals to fracture and to interact with one another so as to grind them down making them smooth and small.

The mixing action is carried out without the use of any heat at any time and the product remains unfiltered so as to retain all nutrients and natural materials.

After the mixing action the discharge valve is opened manually to discharge the product.

The container is sufficiently large to receive a plurality of the buckets or barrels so that raw solid honey from a plurality of the buckets or barrels can be added and admixed.

In the example shown, the container is of 75 litres (20 gallons) so as to be of sufficient size to receive four buckets each of 19 litres (5 gallons) with the buckets or barrels taken from different times of the production season so as to contain honey from different plants.

Typically the clearance is in the range 0.15875 to 0.3175 cm (1/16 to 1/8 inch).

## Claims

1. A method for forming a soft, spreadable honey product comprising:
providing a container (11) with a cylindrical container wall;
rotating an auger (10) within the container with an exterior auger flight (20) having an outer edge closely adjacent the container wall leaving a clearance (20A) therebetween;
the auger flight (20) acting to drive material to one discharge end (15) of the container with a discharge valve (18) at the discharge end;
providing one or more buckets or barrels of raw solid crystalline honey and feeding the honey in solid form onto the flight (20) of the auger (10) to be engaged into the flight and carried toward the discharge end (15);
maintaining the discharge valve (18) closed for period of time to cause the honey to be fed by the auger flight (20) to the discharge end and to pass through the clearance (20A) along the container from the discharge end in a mixing action to effect mixing of the honey;
the mixing action being carried out until the crystals in the honey are broken down sufficiently to form the honey into the soft, spreadable honey product;
the mixing action being carried out without the use of any heat at any time;
and after the mixing action opening the discharge valve (18) to discharge the product.

2. The method according to claim 1 wherein the buckets or barrels are taken from different times of the production season so as to contain honey from different plants.

3. The method according to claim 1 or 2 wherein the raw solid honey from one of the buckets or barrels is fed as a solid block through a feed chute (24) onto the flight (24) of the auger.

4. The method according to any one of claims 1 to 3 wherein the raw solid honey is not filtered.

5. The method according to any one of claims 1 to 4 wherein the clearance (20A) is in the range 0.15875 to 0.3175 cm (1/16 to 1/8 inch).

6. The method according to any one of claims 1 to 5 wherein the mixing action causes the crystals to fracture.

7. The method according to any one of claims 1 to 6 wherein the mixing action causes the crystals to interact with one another so as to grind them down making them smooth and small.

8. The method according to any one of claims 1 to 7 wherein the auger 10 is arranged with an axis thereof vertical so that the discharge end 14 is at the bottom and the raw solid honey is fed from one side through a feed chute 24.

## Patentansprüche

1. Ein Verfahren zum Bilden eines weichen, streichbaren Honigprodukts, umfassend:
Bereitstellen eines Behälters (11) mit einer zylindrischen Behälterwand;
Drehen eines Förderers (10) innerhalb des Behälters mit einer äußeren Förderschnecke (20), die einen äußeren Rand aufweist, der eng an die Behälterwand angrenzt, wobei ein Zwischenraum (20A) dazwischen belassen wird;
Bewegen der Förderschnecke (20), um Material zu einem Auslassende (15) des Behälters mit einem Auslasshahn (18) an dem Auslassende zu treiben;
Bereitstellen eines oder mehrerer Behälter oder Fässer mit rohem festem kristallinem Honig und Zuführen des Honigs in fester Form auf die Schnecke (20) des Förderers (10), um mit der Schnecke einzugreifen und zu dem Auslassende (15) befördert zu werden;
Behalten des Auslasshahns (18) für eine Zeitdauer geschlossen, um zu bewirken, dass der Honig in einem Mischvorgang mittels der Förderschnecke (20) zu dem Auslassende gefördert und von dem Auslassende durch den Zwischenraum (20A) entlang dem Behälter geführt wird, um ein Mischen des Honigs zu bewirken;
wobei der Mischvorgang ausgeführt wird, bis die Kristalle in dem Honig in ausreichender Weise zerbrochen sind, um den Honig in das weiche, streichbare Honigprodukt zu bilden;
wobei der Mischvorgang ohne die Anwendung irgendwelcher Wärme zu irgendeiner Zeit ausgeführt wird;
und Öffnen des Auslasshahns (18) nach dem Mischvorgang, um das Produkt auszugeben.

2. Das Verfahren nach Anspruch 1, wobei die Behälter oder Fässer aus verschiedenen Zeiten der Produktionssaison genommen werden, um Honig von verschiedenen Pflanzen zu enthalten.

3. Das Verfahren nach Anspruch 1 oder 2, wobei der rohe feste Honig von einem der Behälter oder Fässer als ein fester Block durch eine Förderrinne (24) auf die Schnecke (20) des Förderers geführt wird.

4. Das Verfahren nach einem der Ansprüche 1 bis 3, wobei der rohe feste Honig nicht gefiltert wird.

5. Das Verfahren nach einem der Ansprüche 1 bis 4, wobei der Zwischenraum (20A) in dem Bereich von 0,15875 bis 0,3175 cm (1/16 bis 1/8 Inch) liegt.

6. Das Verfahren nach einem der Ansprüche 1 bis 5, wobei der Mischvorgang ein Brechen der Kristalle bewirkt.

7. Das Verfahren nach einem der Ansprüche 1 bis 6, wobei der Mischvorgang ein Wechselwirken der Kristalle miteinander bewirkt, um sie zu zermahlen, wobei sie glatt und klein gemacht werden.

8. Das Verfahren nach einem der Ansprüche 1 bis 7, wobei der Förderer (10) mit einer seiner Achsen vertikal angeordnet wird, so dass das Auslassende (14) am Boden ist und der rohe feste Honig von einer Seite durch eine Förderrinne (24) geführt wird.

## Revendications

1. Méthode pour former un produit de miel fluide et tartinable comprenant les étapes consistant à :
fournir un conteneur (11) avec une paroi de conteneur cylindrique ;
faire tourner une tarière (10) dans le conteneur avec une volée de tarière extérieure (20) ayant un bord extérieur étroitement adjacent à la paroi du conteneur et laissant un espacement (20A) entre eux ;
la volée de tarière (20) agissant pour amener le matériau vers une extrémité d'évacuation (15) du conteneur avec une vanne d'évacuation (18) à l'extrémité d'évacuation ;
fournir un ou plusieurs seaux ou tonneaux de miel cristallin solide brut et amener le miel sous forme solide sur la volée (20) de la tarière (10) pour être engagé dans la volée et transporté vers l'extrémité d'évacuation (15) ;
maintenir la vanne d'évacuation (18) fermée pendant un certain temps pour faire que le miel soit amené par la volée de tarière (20) vers l'extrémité d'évacuation et passe au travers de l'espacement (20A) le long du conteneur depuis l'extrémité d'évacuation dans une action de mélange pour de fait mélanger le miel ;
l'action de mélange étant menée jusqu'à ce que les cristaux dans le miel soient broyés suffisamment pour faire du miel le produit de miel fluide et tartinable ;
l'action de mélange étant effectuée sans l'utilisation de chaleur à aucun moment ;
et après l'action de mélange, ouvrir la vanne d'évacuation (18) pour évacuer le produit.

2. Méthode selon la revendication 1 dans laquelle les seaux ou tonneaux sont pris à différents moments de la saison de production de manière à contenir du miel de différentes plantes.

3. Méthode selon la revendication 1 ou la 2 dans laquelle le miel solide brut de l'un des seaux ou tonneaux est amené sous forme de bloc solide au travers d'une goulotte d'amenée (24) sur la volée (24) de la tarière.

4. Méthode selon l'une quelconque des revendications 1 à 3 dans laquelle le miel solide brut n'est pas filtré.

5. Méthode selon l'une quelconque des revendications 1 à 4 dans laquelle l'espacement (20A) est dans la plage de 0,15875 à 0,3175 cm (1/16 pouce à 1/8 pouce).

6. Méthode selon l'une quelconque des revendications 1 à 5 dans laquelle l'action de mélange fait que les cristaux se fracturent.

7. Méthode selon l'une quelconque des revendications 1 à 6 dans laquelle l'action de mélange fait que les cristaux interagissent les uns avec les autres de façon à les broyer pour les rendre lisses et petits.

8. Méthode selon l'une quelconque des revendications 1 à 7 dans laquelle la volée 10 est disposée dans un axe vertical de façon à ce que l'extrémité d'évacuation 14 soit dans la partie basse et que le miel solide brut soit amené d'un côté au travers d'une goulotte d'amenée 24.
